# EUROPEAN PATENT SPECIFICATION

(11) **EP 3 883 794 B1**
(45) Date of publication and mention of the grant of the patent: **16.10.2024**
(21) Application number: 18811186.8
(22) Date of filing: 22.11.2018
(51) Int. Cl.: B60D 1/24, B60D 1/54, B60D 1/62, G01G 19/08

(54) **SYSTEM FOR DETERMINING A SUPPORT LOAD WHICH RESTS ON A TOWING HITCH**
SYSTEM ZUR BESTIMMUNG EINER STÜTZLAST, DIE AUF EINER ANHÄNGERKUPPLUNG RUHT
SYSTÈME PERMETTANT DE DÉTERMINER UNE CHARGE D'APPUI REPOSANT SUR UN ATTELAGE DE REMORQUAGE

(43) Date of publication of application: 29.09.2021
(73) Proprietor: HELLA GMBH & CO. KGAA, 59552 Lippstadt (DE); Brink Towing Systems B.V., 7951 CX Staphorst (NL)
(72) Inventor: SCHMÄLING, Jan, 97769 Bad Brückenau (DE); BOELEN, Erwin, 9407 KD Assen (NL); HARTVELD, Ruud, 9752 NS Haren (NL)
(74) Representative: Graefe, Jörg
(86) International application number: PCT/EP2018/082253
(87) International publication number: WO 2020/104033

(56) References cited:
- EP-A1- 2 724 876
- EP-A2- 1 234 740
- DE-B3- 102013 011 525
- DE-U1- 202011 105 552
- US-A1- 2015 069 737
- US-A1- 2016 185 170
- US-B1- 9 738 125

## Description

The invention relates to a system for determining a support load which rests on a towing hitch which has a motor for moving a hook of the towing hitch, having a first electronic device which can be mounted in or on the towing hitch, and having a second electronic device which can be mounted in a towing vehicle and can be connected to a network of the towing vehicle, the system having an input for a motor sensor, in particular a motor current sensor, to which a motor sensor of the motor, in particular a motor current sensor, can be connected, with which at least one electrical value of the motor, in particular a motor current can be measured, whereby the first electronic device comprises said input for a motor sensor, whereby the first electronic device comprises a unit for determining the support load as a function of the at least one measured electrical value, and whereby the first electronic device and the second electronic device each have an interface for a communication between each other.

Document EP 2 724 876 A1 discloses a towing hitch. The document discloses an electrically operated towing hitch that can be moved out of sight behind the bumper when not in use. The disclosed towing hitch has a first motor with which the hook of the towing hitch can be moved from a position in which the towing hitch is not in use to a position in which it is in use. The disclosed towing hitch has a second motor which can be used to lock the hook when the hook is moved in the position for use. The first and second motors are controlled by a control unit of the towing hitch. The document also indicates that a sensor is provided to detect a current from the second motor in order to determine the support load on the towing hitch.

Furthermore a second electronic device is known as so-called Trailer Towing Module (TTM) distributed for use in towing vehicles. A measurement signal such as that of the sensor for the current of the second motor in the document EP 2 724 876 A1 can be transmitted to the second electronic device of the towing vehicle via an interface of the coupling and an input of the second electronic devices. The second electronic devices is set up to determine the support load from the measurement signal. The second electronic devices can generate a signal indicating the support load and make it available at an interface, preferably a bus interface, for further use in the vehicle for example for displaying it to a driver or for warning the driver if the support load is too high.

This method of determining the support load has several disadvantages:
The transmission of the measurement signal from the sensor to the second electronic devices takes place via long circuits. These circuits can be exposed to the weather or mechanical loads. Both can affect the measurement signal on its way from the sensor to the second electronic devices. Among other things, it may be necessary to provide for large error tolerances.

The sensor signal provides a measured value of an electrical value that occurs in the motor of the hitch. A value for the support load can only be determined from this value if various parameters of the trailer coupling are known, which can differ from trailer hitch type to trailer hitch type and even for different trailer hitches of one type. In order for the second electronic devices to be able to determine the support load, these parameters must be made known to the second electronic devices, which can only be done once it has been determined which trailer hitch is to be mounted on the towing vehicle. As a result, the second electronic devices must be parameterised when the trailer coupling is fitted, which can be cumbersome and error-prone.

A system according to the preamble of claim 1 is disclosed in document EP 2 724 876 A1 and in document DE 102013011525 B3. It has been found that determining a value for the support load from the electric value measured does not always is reliable.

This is where the present invention can help.

The invention was based on the problem of improving a system that can be used with a towing hitch of the type mentioned above in such a way that the measurements are less sensitive to errors.

According to the invention, this task is solved by a system according to claim 1. It has been found that the electrical value, in particular the motor current used to determine the support load, not only depends on the support load exerted on the towing hitch, but also on the temperature in the area of the towing hitch. Therefore the temperature is included in the determination of the support load. The first electronic device has at least one input for at least one sensor for measuring the temperature in the region of the hook. The unit for determining the support load is connected or connectable to the sensor for measuring the temperature. The unit for determining the support load determines the support load as a function of the measured temperature.

In contrast to the towing hitch known from document EP 2 724 876 A1, the measuring signal of the sensor is not transmitted to the second electronic device. Instead, the unit used to determine the support load, which is provided in the first electronic device of the system according to the invention, determines the support load from the measurement signal. Individual parameters of the towing hitch that are stored in the unit for determining the support load can be included in the determination. The unit for determining the support load can be provided in the close vicinity of the sensor, so that long transmission paths from the sensor to the unit for determining the support load can be omitted. This not only reduces the cabling effort, but also reduces tolerances, as the shorter transmission path is less prone to errors and malfunctions. The unit for determining the support load may be a hardware unit or a software unit.

In one embodiment the unit for determining the support load can be a microcontroller or it can include a microcontroller. The microcontroller could be part of an electronical control unit (ECU), which can be used for the control of one or more motors of the towing hitch. The first electronic device could be such an ECU. Nevertheless the control of the at least one motor could be implemented in the second electronic device alternatively.

The connection for a communication between the first electronic device and the second electronic device can be a LIN-Bus or any other kind of bus. Therefore, the communication interfaces of the first and second device are LIN-Bus-interfaces.

Further sensors could be connectable to the first electronic device. These can supply measured values which are used to determine the support load. However, sensors may be provided for determining measured values which are not relevant for determining the support load. These values can possibly be transferred to the second electronic device or another component in the towing vehicle. Thus, a sensor for measuring a trailer angle may be provided.

The invention is explained in more detail below on the basis of the attached drawings. The following shows:

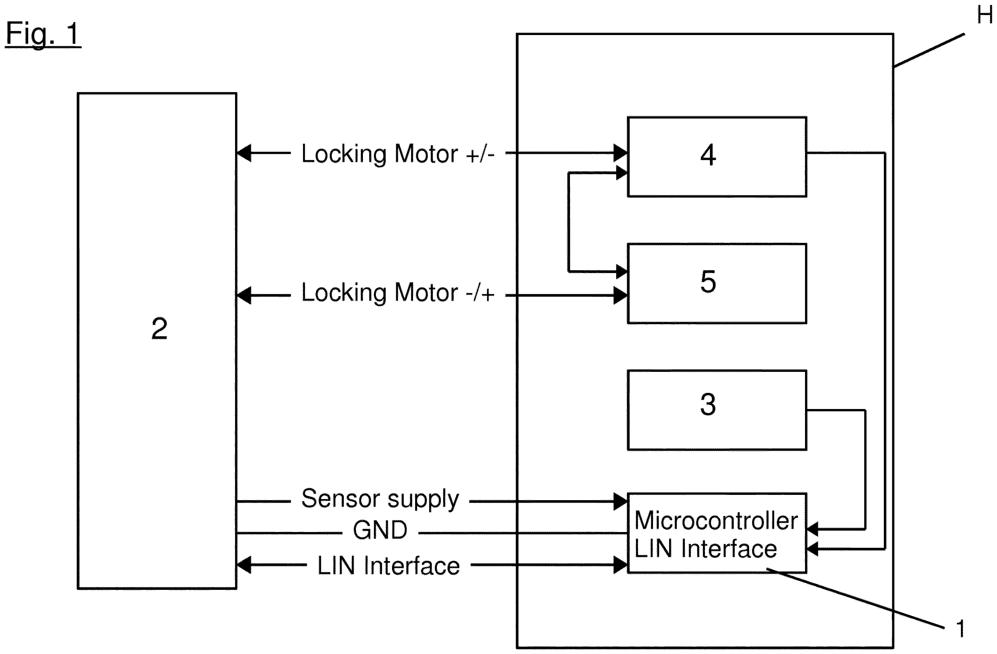

- fig. 1: a block diagram of a system comprising a first electronic device and a second electronic device, arranged in a towing vehicle.

In the block diagram, reference symbol 1 denotes the first electronic device according to the invention. The first electronic device 1 might be a part of a towing hitch H and may be mounted in or on a hook of the towing hitch.

The towing hitch H is connected to the second electronic device 2 via various lines, including a communication line, e.g. LIN bus line that connects the first electronic device 1, which includes a LIN bus interface, to the second electronic device 2. Supply lines are also provided to supply sensors 3, 4, a motor 5 and the first electronic device 1.

The system shown in figure 1 comprises a sensor 4 for measuring an electrical value, such as e.g. a current sensor, with which an electrical value, such as the current, of the motor 5 of the towing hitch can be measured. The towing hitch H may further comprise a temperature sensor 3, for measuring the temperature in the area of the towing hook. The sensors 3, 4 are connected to the first electronic device 1.

The motor 5 of the towing hitch H is used to exert a force on a hook of the towing hitch H. If a trailer is supported on the towing hitch H, the motor 5 works against the support load. The greater the support load, the more power the motor 5 needs to work against the support load. The greater the power required to work against the support load, the greater the motor current detected by the current sensor 4.

The motor 5 may only be intended to enable the support load to be determined. Preferably, however, the motor 5 also has other functions. For example, the towing hitch H can be a towing hitch like that known from document EP 2 724 876 A1 and can be moved out of sight behind the bumper when not in use.

The first electronic device 1 is programmed in such a way that it can determine the support load from measured values for temperature and motor current supplied by sensors 3, 4. This can be done, for example, by calculation, by looking up a look-up table or by other methods.

The determined support load is then transmitted to the second electronic device 2 via the interface of the first electronic device 1 and can then be used in the towing vehicle. The second electronic device 2 is mounted in the towing vehicle and is connected to a network of the towing vehicle. Via the this network the second electronic device 2 can distribute a signal indicating a value of the support load.

### List of reference signs

- 1: first electronic device
- 2: second electronic device
- 3: temperature sensor
- 4: current sensor
- 5: Motor

- H: towing hitch

## Claims

1. System for determining a support load which rests on a towing hitch (H) which has a motor (5) for moving a hook of the towing hitch (H), having a first electronic device (1) which can be mounted in or on the towing hitch (H), and having a second electronic device (2) which can be mounted in a towing vehicle and can be connected to a network of the towing vehicle, the system having an input for a motor sensor (4) to which a motor sensor (4) of the motor (5) can be connected, with which at least one electrical value of the motor (5) can be measured,
whereby the first electronic device (1) comprises said input for a motor sensor (4),
whereby the first electronic device (1) comprises a unit for determining the support load as a function of the at least one measured electrical value, and whereby the first electronic device (1) and the second electronic device (2) have an interface for a communication between each other.
**characterised in**
**that** the first electronic device (1) has at least one input for a sensor (3) for measuring the temperature in the region of the hook.
**that** the unit for determining the support load is connected to the input for the sensor (3) for measuring the temperature and/or the sensor (4) for measuring the motor current und
**that** the unit for determining is configured to determine the support load as a function of the measured temperature.

2. System according to claim 1, **characterized in that** at least one of the electronic devices (1, 2) is a microcontroller or it includes a microcontroller.

3. System according to claim 1 or claim 2, **characterized in that** the interfaces are LIN-Bus-, Bluetooth-, zigbee-, WIFI-Interfaces.

4. System according to one of the claims 1 to 3, **characterized in that** the first electronic device (1) has at least one input for a sensor for measuring a trailer angle.

5. System according to one of the claims 1 to 4, **characterized in that** the second electronic device (2) comprises a trigger unit to trigger the first electronic device (1) to determine the support load.

6. System according to one of the claims 1 to 5, **characterized in that** the second electronic device (2) is connected to a human machine interface and/or another component of the towing vehicle.

7. System according claim 6, **characterized in that** the second electronic device and/or the human machine interface and/or the other component are configured to indicate the support load, if the determined support load is outside a prescribed range.

## Patentansprüche

1. System zum Bestimmen einer Stützlast, die auf einer Anhängekupplung (H) ruht, die einen Motor (5) zum Bewegen eines Hakens der Anhängekupplung (H) aufweist, eine erste elektronische Vorrichtung (1) aufweisend, die in oder an der Anhängekupplung (H) montiert werden kann, und eine zweite elektronische Vorrichtung (2) aufweisend, die in einem Zugfahrzeug montiert werden kann und an ein Netzwerk des Zugfahrzeugs angeschlossen werden kann, wobei das System einen Eingang für einen Motorsensor (4) aufweist, an den ein Motorsensor (4) des Motors (5) angeschlossen werden kann, mit dem mindestens ein elektrischer Wert des Motors (5) gemessen werden kann,
wobei die erste elektronische Vorrichtung (1) den Eingang für einen Motorsensor (4) umfasst,
wobei die erste elektronische Vorrichtung (1) eine Einheit zum Bestimmen der Stützlast in Abhängigkeit von dem mindestens einen gemessenen elektrischen Wert umfasst, und
wobei die erste elektronische Vorrichtung (1) und die zweite elektronische Vorrichtung (2) eine Schnittstelle für eine Kommunikation miteinander aufweisen.
**dadurch gekennzeichnet,**
**dass** die erste elektronische Vorrichtung (1) mindestens einen Eingang für einen Sensor (3) zum Messen der Temperatur in dem Bereich des Hakens aufweist
**dass** die Einheit zum Bestimmen der Stützlast an den Eingang für den Sensor (3) zum Messen der Temperatur und/oder den Sensor (4) zum Messen des Motorstroms angeschlossen ist, und
**dass** die Einheit zum Bestimmen dazu konfiguriert ist, die Stützlast in Abhängigkeit von der gemessenen Temperatur zu bestimmen.

2. System nach Anspruch 1, **dadurch gekennzeichnet, dass** mindestens eine der elektronischen Vorrichtungen (1, 2) ein Mikrocontroller ist oder einen Mikrocontroller beinhaltet.

3. System nach Anspruch 1 oder Anspruch 2, **dadurch gekennzeichnet, dass** die Schnittstellen LIN-Bus-, Bluetooth-, Zigbee-, WIFI-Schnittstellen sind.

4. System nach einem der Ansprüche 1 bis 3, **dadurch gekennzeichnet, dass** die erste elektronische Vorrichtung (1) mindestens einen Eingang für einen Sensor zum Messen eines Anhängerwinkels aufweist.

5. System nach einem der Ansprüche 1 bis 4, **dadurch gekennzeichnet, dass** die zweite elektronische Vorrichtung (2) eine Auslösereinheit umfasst, um die erste elektronische Vorrichtung (1) auszulösen, die Stützlast zu bestimmen.

6. System nach einem der Ansprüche 1 bis 5, **dadurch gekennzeichnet, dass** die zweite elektronische Vorrichtung (2) an eine Mensch-Maschine-Schnittstelle und/oder eine weitere Komponente des Zugfahrzeugs angeschlossen ist.

7. System nach Anspruch 6, **dadurch gekennzeichnet, dass** die zweite elektronische Vorrichtung und/oder die Mensch-Maschine-Schnittstelle und/oder die weitere Komponente dazu konfiguriert sind, die Stützlast anzuzeigen, wenn die bestimmte Stützlast außerhalb eines vorgegebenen Bereichs liegt.

## Revendications

1. Système pour déterminer une charge d'appui qui repose sur un attelage de remorquage (H) qui présente un moteur (5) pour déplacer un crochet de l'attelage de remorquage (H), présentant un premier dispositif électronique (1) qui peut être monté dans, ou sur, l'attelage de remorquage (H), et présentant un second dispositif électronique (2) qui peut être monté dans un véhicule tracteur et peut être connecté à un réseau du véhicule tracteur, le système présentant une entrée pour un capteur de moteur (4) à laquelle un capteur de moteur (4) du moteur (5) peut être raccordé, au moyen duquel au moins une valeur électrique du moteur (5) peut être mesurée,
selon lequel le premier dispositif électronique (1) comprend ladite entrée pour un capteur de moteur (4),
selon lequel le premier dispositif électronique (1) comprend une unité pour déterminer la charge d'appui en fonction de la au moins une valeur électrique mesurée, et
selon lequel le premier dispositif électronique (1) et le second dispositif électronique (2) présentent une interface pour communiquer entre eux,
**caractérisé en ce que**
le premier dispositif électronique (1) présente au moins une entrée pour un capteur (3) pour mesurer la température dans la région du crochet,
l'unité pour déterminer la charge d'appui est raccordée à l'entrée pour le capteur (3) pour mesurer la température et/ou le capteur (4) pour mesurer le courant moteur et
l'unité de détermination est configurée pour déterminer la charge d'appui en fonction de la température mesurée.

2. Système selon la revendication 1, **caractérisé en ce qu'**au moins l'un des dispositifs électroniques (1, 2) est un microcontrôleur ou qu'il inclut un microcontrôleur.

3. Système selon la revendication 1 ou la revendication 2, **caractérisé en ce que** les interfaces sont des interfaces LIN-Bus, Bluetooth, Zigbee, WIFI.

4. Système selon l'une des revendications 1 à 3, **caractérisé en ce que** le premier dispositif électronique (1) présente au moins une entrée pour un capteur pour mesurer un angle de remorque.

5. Système selon l'une des revendications 1 à 4, **caractérisé en ce que** le second dispositif électronique (2) comprend une unité de déclenchement pour déclencher le premier dispositif électronique (1) pour déterminer la charge d'appui.

6. Système selon l'une des revendications 1 à 5, **caractérisé en ce que** le second dispositif électronique (2) est connecté à une interface homme-machine et/ou un autre composant du véhicule tracteur.

7. Système selon la revendication 6, **caractérisé en ce que** le second dispositif électronique et/ou l'interface homme-machine et/ou l'autre composant sont configurés pour indiquer la charge d'appui, si la charge d'appui déterminée est en dehors d'une plage prescrite.
